# EUROPEAN PATENT APPLICATION

(11) **EP 3 223 552 A1**
(43) Date of publication of application: **27.09.2017**
(21) Application number: 17158483.2
(22) Date of filing: 28.02.2017
(51) Int. Cl.: H04W 24/02, H04W 16/26

(54) **METHOD AND APPARATUS FOR DEPLOYING A RELAY NODE AND SYSTEM**

(30) Priority: 25.03.2016 CN 201610178340
(71) Applicant: Fujitsu Limited, Kanagawa 211-8588 (JP)
(72) Inventor: XU, Yi, Chaoyang District Beijing 100027 (CN); TIAN, Jun, Chaoyang District Beijing 100027 (CN); LI, Hongchun, Chaoyang District Beijing 100027 (CN)
(74) Representative: Schultes, Stephan

(57) **Abstract**

A method and apparatus for deploying a relay node and a system. In an implementation, the apparatus for deploying includes: detecting receiving power of all neighboring nodes during movement of a relay node taken as a node to be deployed, and taking a predetermined number of neighboring nodes which have joined in a network, are capable of communicating with a sink node and have relatively high receiving power, in all the neighboring nodes as flag nodes of the relay node; comparing a sum of receiving power of all detected flag nodes with a deployment prompt decision interval; and performing a corresponding prompt according to a comparison result. Hence, connectivity between all sensor nodes and a sink node in the wireless sensor network may be achieved.

## Description

### Field

This disclosure relates to the field of communication technologies, and in particular to a method and apparatus for deploying a relay node and a system.

### Background

A wireless sensor network is a network constituted by sensor nodes, which is capable of monitoring, sensing and collecting various information on a sensed object interested by an observer in a node deployment region in a real-time manner, transmitting the information in a wireless manner after processing the information, and finally transmitting the information to the observer via a wireless network. Validity and connectivity of the wireless sensor network are dependent on deployment of sensor nodes, and the deployment of the nodes have direct effects on a network coverage level, power consumption of communication and resource management.

According to different applications, node deployment is usually divided into three types, namely deterministic deployment, deployment in which sensor nodes are immovable and deployment in which nodes are movable. Usually, in a case where a terrain of a detected region is unknown, nodes are randomly deployed at the beginning. However, such a manner is often incapable of obtaining a very good coverage level. For example, in a case where some nodes are concentrated in a small part of regions and only few nodes are located in other regions, a coverage level is very low, and cannot satisfy the application demands. While in some regions of poor environments, nodes cannot be deployed at any positions, and are manually deployed by professional technicians. And due to the effect of geographical positions, communication ranges of each node at different positions are different. Therefore, how to deploy a relay node is a direction of study in the industry.

It should be noted that the above description of the background is merely provided for clear and complete explanation of this disclosure and for easy understanding by those skilled in the art. And it should not be understood that the above technical solution is known to those skilled in the art as it is described in the background of this disclosure.

### Summary

In order to achieve connectivity of all sensor nodes with a sink node, embodiments of this disclosure provide a method and apparatus for deploying a relay node and a system.

According to a first aspect of the embodiments of this disclosure, there is provided an apparatus for deploying a relay node, configured in a relay node taken as a node to be deployed, the apparatus including:
a detecting module configured to detect receiving power of all neighboring nodes during movement of the relay node, and take a predetermined number of neighboring nodes which have joined in a network, are capable of communicating with a sink node and have relatively high receiving power, in all the neighboring nodes as flag nodes of the relay node;
a comparing module configured to compare a sum of receiving power of all flag nodes detected by the detecting module with a deployment prompt decision interval; and
a prompting module configured to perform a corresponding prompt according to a comparison result of the comparing module.

According to a second aspect of the embodiments of this disclosure, there is provided an apparatus for deploying a relay node, configured in a coordinator, the apparatus including:
a communicating module configured to receive information from a node to be deployed; and
a determining module configured to determine a deployment prompt decision interval according to the information from the node to be deployed;
and the communicating module transmits the deployment prompt decision interval determined by the determining module to the node to be deployed, so that the node to be deployed performs a corresponding deployment prompt according to the deployment prompt decision interval.

According to a third aspect of the embodiments of this disclosure, there is provided a communication system, including a sink node and deployed nodes; wherein, the communication system further includes a coordinator and a relay node taken as a node to be deployed,
the relay node being configured to:
detect receiving power of all neighboring nodes during movement of the relay node, and take a predetermined number of neighboring nodes which have joined in a network, are capable of communicating with a sink node and have relatively high receiving power, in all the neighboring nodes as flag nodes of the relay node;
compare a sum of receiving power of all flag nodes detected by the detecting module with a deployment prompt decision interval; and
perform a corresponding prompt according to a comparison result of the comparing module,
and the coordinator being configured to:
   receive information from a node to be deployed;
   determine a deployment prompt decision interval according to the information from the node to be deployed; and
   transmit the determined deployment prompt decision interval to the node to be deployed, so that the node to be deployed performs a corresponding deployment prompt according to the deployment prompt decision interval.

An advantage of the embodiments of this disclosure exists in that with the embodiments of this disclosure, connectivity between all sensor nodes and a sink node in the wireless sensor network may be achieved.

With reference to the following description and drawings, the particular embodiments of this disclosure are disclosed in detail, and the principles of this disclosure and the manners of use are indicated. It should be understood that the scope of the embodiments of this disclosure is not limited thereto. The embodiments of this disclosure contain many alternations, modifications and equivalents within the spirits and scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprises/comprising/includes/including" when used in this specification is taken to specify the presence of stated features, integers, steps or components but does not preclude the presence or addition of one or more other features, integers, steps, components or groups thereof.

### Brief Description of the Drawings

Elements and features depicted in one drawing or embodiment of the disclosure may be combined with elements and features depicted in one or more additional drawings or embodiments. Moreover, in the drawings, like reference numerals designate corresponding parts throughout the several views and may be used to designate like or similar parts in more than one embodiment.

The drawings are included to provide further understanding of the present disclosure, which constitute a part of the specification and illustrate the exemplary embodiments of the present disclosure, and are used for setting forth the principles of the present disclosure together with the description. It is clear and understood that the accompanying drawings in the following description are some embodiments of this disclosure, and for those of ordinary skills in the art, other accompanying drawings may be obtained according to these accompanying drawings without making an inventive effort. In the drawings:
FIG. 1 is a schematic diagram of a wireless sensor network of an embodiment;
FIG. 2 is a schematic diagram of an implementation of an apparatus for deploying a relay node of Embodiment 1;
FIG. 3 is a schematic diagram of an implementation of a deployment prompt decision interval of the embodiment;
FIG. 4 is a schematic diagram of an implementation of an apparatus for deploying a relay node of Embodiment 2;
FIG. 5 is a schematic diagram of a relationship between the deployment prompt decision interval and the number of times of deployment of the embodiment;
FIG. 6 is a schematic diagram of an implementation of a relay node of Embodiment 3;
FIG. 7 is a schematic diagram of a systematic structure of the relay node of Embodiment 3;
FIG. 8 is a schematic diagram of an implementation of a coordinator of Embodiment 4;
FIG. 9 is a schematic diagram of a systematic structure of the coordinator of Embodiment 4;
FIG. 10 is a schematic diagram of a communication system of Embodiment 5;
FIG. 11 is a schematic diagram of an implementation of a method for deploying of Embodiment 6;
FIG. 12 is a flowchart of another implementation of a method for deploying of Embodiment 6;
FIG. 13 is a schematic diagram of an implementation of a method for deploying of Embodiment 7;
FIG. 14 is a flowchart of processing deployment request information in the method of Embodiment 7; and
FIG. 15 is a flowchart of processing a sum of receiving power in the method of Embodiment 7.

### Detailed Description

These and further aspects and features of the present disclosure will be apparent with reference to the following description and attached drawings. In the description and drawings, particular embodiments of the disclosure have been disclosed in detail as being indicative of some of the ways in which the principles of the disclosure may be employed, but it is understood that the disclosure is not limited correspondingly in scope. Rather, the disclosure includes all changes, modifications and equivalents coming within the spirit and terms of the appended claims.

In the embodiments of this disclosure, the method and apparatus for deploying a relay node and the system of the embodiments shall be described taking a wireless sensor network as an example. However, the embodiments are not limited thereto, and the method, apparatus and system may also be applicable to any wireless networks demanding for node deployment.

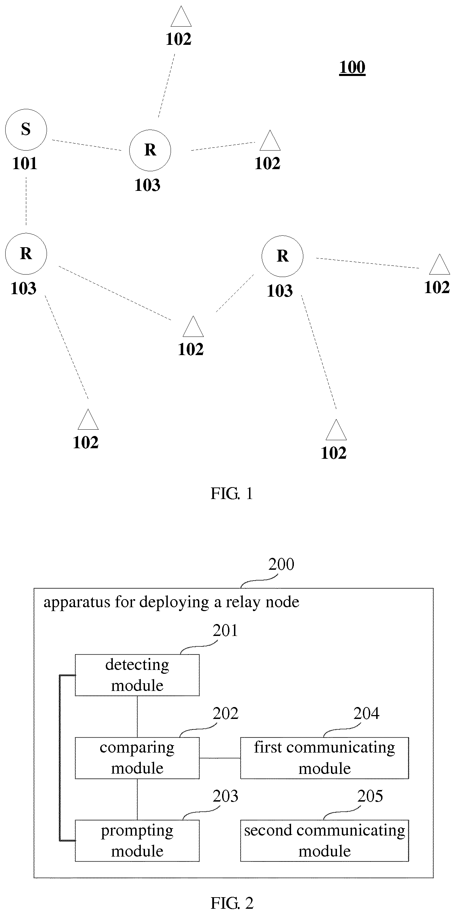

FIG. 1 is a schematic diagram of a wireless sensor network of an embodiment. As shown in FIG. 1, in the wireless sensor network 100, a sink node 101 and some sensor nodes 102 have been deployed. By deploying relay nodes 103 by using the method and apparatus of the embodiments, connectivity between the sensor nodes 102 and the sink node 101 may be achieved.

Various implementations of this disclosure shall be described below with reference to the accompanying drawings. These implementations are illustrative only, and are not intended to limit this disclosure.

### Embodiment 1

An embodiment of this disclosure provides an apparatus for deploying a relay node, configured in a relay node taken as a node to be deployed. FIG. 2 is a schematic diagram of a structure of the apparatus. Referring to FIG. 2, the apparatus 200 includes a detecting module 201, a comparing module 202 and a prompting module 203. In this embodiment, the detecting module 201 detects receiving power of all neighboring nodes during movement of the relay node, and takes a predetermined number of neighboring nodes which have joined in a network, are capable of communicating with a sink node and have relatively high receiving power, in all the neighboring nodes as flag nodes of the relay node; the comparing module 202 compares a sum of receiving power of all flag nodes detected by the detecting module 201 with a deployment prompt decision interval; and the prompting module 203 performs a corresponding prompt according to a comparison result of the comparing module 202.

In this embodiment, whether the current position is suitable for deploying a relay node is determined by detecting receiving power of all the flag nodes and comparing it with the deployment prompt decision interval, which is prompted to personnel of network deployment. Hence, the personnel of network deployment may perform corresponding operations according to the prompt of the prompting module. For example, if the prompting module prompts it is needed to continue with movement, the personnel of network deployment may make the relay node continue with movement to find a suitable deployment position; if the prompting module prompts that deployment may be performed, the personnel of network deployment may deploy the relay node at the current position to achieve deployment of the relay node; and if the prompting module prompts alarm and/or back, the personnel of network deployment may make the relay node turn back along the original way to find a suitable deployment position. Hence, by using the apparatus to deploy the relay node in the wireless sensor network, connectivity between all sensor nodes and the sink node in the wireless sensor network may be achieved.

In this embodiment, the detecting module 201 may find the flag nodes by detecting receiving power of all neighboring nodes, so as to obtain receiving power of all the flag nodes.

The neighboring nodes here refer to neighboring nodes of the relay node, i.e. nodes that can be detected by the detecting module 201 when the relay node is at the current position.

The flag nodes here need to satisfy two conditions. One condition is that they have joined in the network and are capable of communicating with the sink node, this condition being capable of guaranteeing that if the relay node is deployed at the current position, the relay node is capable of connecting with the sink node. And the other condition is that receiving power is relatively large, this condition being capable of guaranteeing communication quality. Here, the receiving power being relatively large is for all the above neighboring nodes. For example, in all the neighboring nodes, neighboring nodes of receiving power greater than a threshold value may be deemed as neighboring nodes of relatively large receiving power, and these neighboring nodes may be taken as flag nodes; and for another example, all the neighboring nodes are ordered as per receiving power, and neighboring nodes of which receiving power is ordered in the top few places are taken as flag nodes.

In this embodiment, the number of the flag nodes is not limited, and if the number of the above neighboring nodes is relatively large, for example, receiving power of multiple neighboring nodes is detected, several neighboring nodes satisfying the above two conditions may be selected therefrom and taken as flag nodes, for example, three neighboring nodes are selected; and if the number of the above neighboring nodes is not large, for example, receiving power of only one or two neighboring nodes is detected, and the one or two neighboring nodes satisfy the first one of the above two conditions, the one or two neighboring nodes is/are taken as a flag node(s).

In this embodiment, the comparing module 202 may compare the sum of the receiving power of all the flag nodes with the deployment prompt decision interval, so as to decide whether the current position is suitable for deploying the relay node. The deployment prompt decision interval here is a power range, which is not constant, and may be adjusted in a real-time manner according to a deployment situation.

In an implementation, the deployment prompt decision interval is provided by a coordinator. As shown in FIG. 2, in this implementation, the apparatus 200 further includes a first communicating module 204, which is configured to interchange the deployment prompt decision interval with the coordinator, so as to obtain the deployment prompt decision interval and provide it to the comparing module 202. In this implementation, the first communicating module 204 may request the coordinator to provide the deployment prompt decision interval by transmitting deployment request information to the coordinator. After receiving the deployment request information, the coordinator may determine, according to a policy of itself, whether the deployment prompt decision interval is a predetermined interval or an adjusted interval, so as to provide the determined deployment prompt decision interval to the apparatus 200 of this embodiment. Processing of the coordinator shall be described in the following embodiment. In this implementation, the apparatus 200 may further include a storage module (not shown), which is configured to save the deployment prompt decision interval obtained from the coordinator.

In another implementation, the deployment prompt decision interval may also be obtained from the coordinator by other means, or may be determined by the apparatus 200 according to a policy of itself. And a manner of obtaining the deployment prompt decision interval is not limited in this embodiment.

In this embodiment, the deployment prompt decision interval includes multiple threshold value intervals, i.e. multiple power ranges, each threshold value interval corresponding to a detection result, and the prompting module 203 performs a corresponding prompt according to a threshold value interval where the sum of the receiving power of all the flag nodes is in.

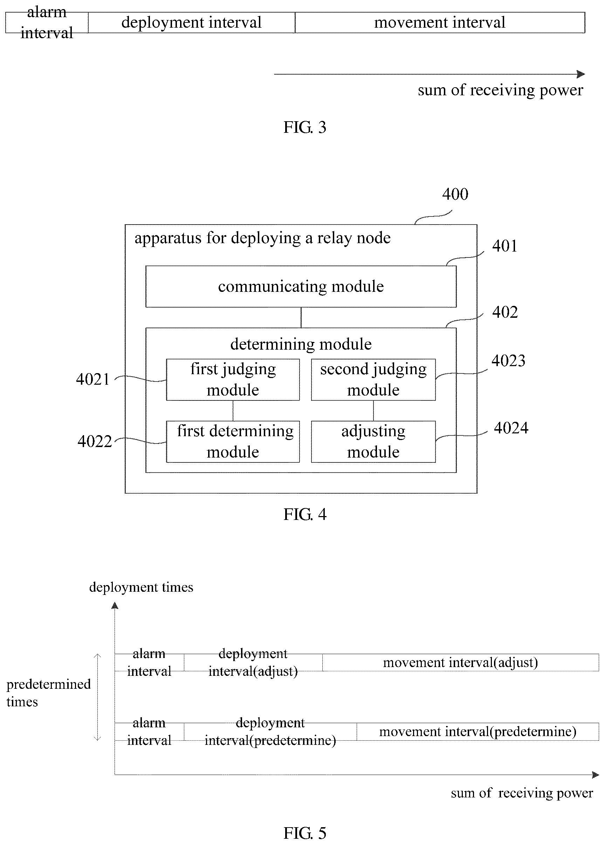

FIG. 3 is an example of the deployment prompt decision interval of this embodiment. As shown in FIG. 3, in this example, the deployment prompt decision interval includes three threshold value intervals, which are a movement interval, a deployment interval, and an alarm interval, respectively; wherein, a detection result to which the movement interval corresponds is that: the sum of the receiving power is relatively large, and it is unsuitable for deploying a relay node; a detection result to which the deployment interval corresponds is that: the sum of the receiving power is suitable, and a relay node may be deployed; and a detection result to which the alarm interval corresponds is that: the sum of the receiving power is relatively small, and it is unsuitable for deploying a relay node.

In this implementation, if the sum of the receiving power of all the flag nodes is in the movement interval, the prompting module 203 may perform a prompt of "keeping moving"; if the sum of receiving power of all the flag nodes is in the deployment interval, the prompting module 203 may perform "a deployable prompt"; and if the sum of receiving power of all the flag nodes is in the alarm interval, the prompting module 203 may perform "an alarm prompt" and/or "a back prompt".

A manner of prompt is not limited in this embodiment, which may be a display prompt, a voice prompt, or an indicator light prompt, only if the above three different types of processing manners can be prompted. And corresponding to different manners of prompt, forms of the prompting module 203 may be different. For example, corresponding to the display prompt, the prompting module 203 may be a display screen, which displays different processing manners via words, or images, etc.; corresponding to the voice prompt, the prompting module 203 may be a loudspeaker, which indicates different processing manners via different forms of voices or contents; and corresponding to the indicator light prompt, the prompting module 203 may be a indicator light, which indicates different processing manners via flash or different colors.

In this implementation, the number of the threshold value intervals is not limited. FIG. 3 shows three threshold value intervals corresponding to three different detection results. And in particular implementation, more or less threshold value intervals may be set as demanded.

In this implementation, if the prompting module 203 performs an alarm prompt and/or a back prompt, the relay node may turn back along the original way, hence, the detecting module 201 continues to detect the receiving power of all the flag nodes; the comparing module 202 may compare the sum of the receiving power of all the flag nodes obtained by the continued detection with a current deployment prompt decision interval; the detecting module 201 may continue to detect the receiving power of all the flag nodes when the sum of the receiving power of all the flag nodes is still in the alarm interval; and the prompting module 203 may perform a deployable prompt when the sum of the receiving power of all the flag nodes is not in the alarm interval. And at this moment, even though the apparatus 200 falls within the movement interval, it is still deployed, thereby solving a problem that the apparatus 200 is always possibly unable to find a suitable region for deployment.

In this embodiment, as shown in FIG. 2, the apparatus 200 may further include a second communicating module 205, which is configured to transmit the sum of the receiving power of all the flag nodes in deploying the relay node to the coordinator after the relay node is deployed, so that the coordinator adjusts the deployment prompt decision interval according to the sum of the receiving power.

As described above, the apparatus 200 may also not include the second communicating module 205, but may adjust the deployment prompt decision interval according to a sum of receiving power of all the nodes in deploying the relay node after the relay node is deployed, a manner of adjustment being identical to that of the coordinator, which shall be described in detail in the following embodiment.

In this embodiment, a manner of determining whether the relay node has been deployed is not limited. For example, after the prompting module 203 performs "a deployable prompt", it is deemed after a predetermined period of time that the relay node has been deployed. Hence, the sum of the receiving power of all the nodes in deploying the relay node may be transmitted by the second communicating module 205 to the coordinator, or the apparatus 200 itself adjusts the deployment prompt decision interval according to the sum of the receiving power of all the nodes in deploying the relay node. For another example, after the prompting module 203 performs "a deployable prompt", whether the relay node has been deployed is determined by other functional keys, and after it is determined that the relay node has been deployed, the sum of the receiving power of all the nodes in deploying the relay node may be transmitted by the second communicating module 205 to the coordinator, or the apparatus 200 itself adjusts the deployment prompt decision interval according to the sum of the receiving power of all the nodes in deploying the relay node.

In this embodiment, the relay node taken as a node to be deployed may move starting from a position of a deployed node, such as the sink node. Through detection by the detecting module 201, the sink node satisfies the above two conditions, and may be taken as a flag node of the relay node, receiving power of the sink node thus obtained being relatively large. Through comparison by the comparing module 202, the receiving power is determined as being in the above movement interval, and it is not suitable for deploying the relay node, hence, the prompting module 203 may perform a prompt of "keeping moving". As the relay node continues to move, it is farther and farther from the sink node, and the receiving power of the sink node becomes smaller and smaller. At this moment, through comparison by the comparing module 202, the receiving power is determined as being in the above deployment interval, and it is suitable for deploying the relay node, hence, the prompting module 203 may perform a prompt of "deployable". If the relay node is not deployed at the current position and the relay node continues to move, it is possible that the receiving power is in the above alarm interval, and the prompting module 203 performs an "alarm" prompt and/or a "back" prompt. At this moment, the relay node may be made to turn back along the original way, until it leaves the above alarm interval, and the prompting module 203 performs a "deployable" prompt.

By deploying the relay node by the apparatus of this embodiment, connectivity between all the sensor nodes and the sink node in the wireless sensor network may be achieved.

### Embodiment 2

This embodiment provides an apparatus for deploying a relay node, configured in a coordinator, wherein contents identical to those in Embodiment 1 shall not be described herein any further.

FIG. 4 is a schematic diagram of the apparatus for deploying a relay node. Referring to FIG. 4, the apparatus 400 includes a communicating module 401 and a determining module 402. The communicating module 401 is configured to receive information from a node to be deployed and the determining module 402 is configured to determine a deployment prompt decision interval according to the information from the node to be deployed. In this embodiment, the communicating module 401 may transmit the deployment prompt decision interval determined by the determining module 402 to the node to be deployed, so that the node to be deployed performs a corresponding deployment prompt according to the deployment prompt decision interval.

In this embodiment, as described above, when the node to be deployed has a request for deployment, it will transmit deployment request information to the coordinator, and the coordinator may determine whether the deployment prompt decision interval is a predetermined interval or an adjusted interval according to the deployment request information, and provide the determined deployment prompt decision interval to the node to be deployed.

As shown in FIG. 4, in this implementation, the determining module 402 includes a first judging module 4021 and a first determining module 4022. The first judging module 4021 judges whether an operational time of a network is greater than a predetermined time when the above deployment request information is received. When it is judged no by the first judging module 4021, it shows that the network deployment just starts for a while, and the first determining module 4022 determines that the deployment prompt decision interval is a predetermined decision interval, and when it is judged yes by the first judging module 4021, it shows that the network deployment has passed a period of time, and the first determining module determines that the deployment prompt decision interval is an adjusted deployment prompt decision interval.

In this embodiment, as described above, after the relay node is deployed, it will transmit the sum of the receiving power of all the flag nodes in deploying the relay node to the coordinator, and the coordinator may adjust or save the deployment prompt decision interval according to the sum of the receiving power of all the flag nodes in deploying the relay node.

As shown in FIG. 4, in this implementation, the determining module 402 includes a second judging module 4023 and an adjusting module 4024. The second judging module 4023 judges whether an operational time of a network is greater than a predetermined time when the above sum of receiving power is received. When it is judged yes by the second judging module 4023, it shows that the network deployment has passed a period of time, and the adjusting module 4024 adjusts the deployment prompt decision interval according to the sum of receiving power; and when it is judged no by the second judging module 4023, it shows that the network deployment just starts for a while, and the adjusting module 4024 saves the received sum of receiving power, so as to make preparation for subsequent adjustment of the decision interval.

In this embodiment, the apparatus 400 may further include a storage module (not shown), which is configured to save the above predetermined decision interval, the received sum of receiving power, etc.

In this embodiment, as described above, the deployment prompt decision interval includes multiple threshold value intervals, and as the above sum of receiving power is in the deployment interval, the adjusting module 4024 may adjust a size of the deployment interval by taking a mean value of the sum of receiving power as a median of the deployment interval of the multiple threshold value intervals, and based upon which, adjust sizes of other threshold value intervals (such as the movement interval) by keeping an alarm interval of the multiple threshold value intervals constant. However, such an adjustment method is illustrative only, and this embodiment is not limited thereto.

FIG. 5 is a schematic diagram of a relationship between the deployment prompt decision interval and the number of times of deployment. As shown in FIG. 5, at a first time of deployment, the predetermined decision interval is used, the coordinator transmits the predetermined decision interval to the node to be deployed, the node to be deployed compares the predetermined decision interval with the sum of the receiving power of all the current flag nodes, and then performs a corresponding prompt; after a predetermined number of times of deployment, the coordinator adjusts the decision interval according to the received sum of the receiving power of all the flag nodes in deploying the relay node, and transmits the adjusted decision interval to the node to be deployed, the node to be deployed compares the adjusted decision interval with the sum of the receiving power of all the current flag nodes, and then performs a corresponding prompt. According to the prompt of the node to be deployed, the personnel of network deployment may perform corresponding processing, thereby finishing the deployment of the relay node, and achieving connectivity between all the sensor nodes and the sink node in the wireless sensor network.

By transmitting the deployment prompt decision interval by the apparatus of this embodiment to the node to be deployed, the node to be deployed performs the deployment of the relay node accordingly by using the method of Embodiment 1, thereby achieving connectivity between all the sensor nodes and the sink node in the wireless sensor network.

### Embodiment 3

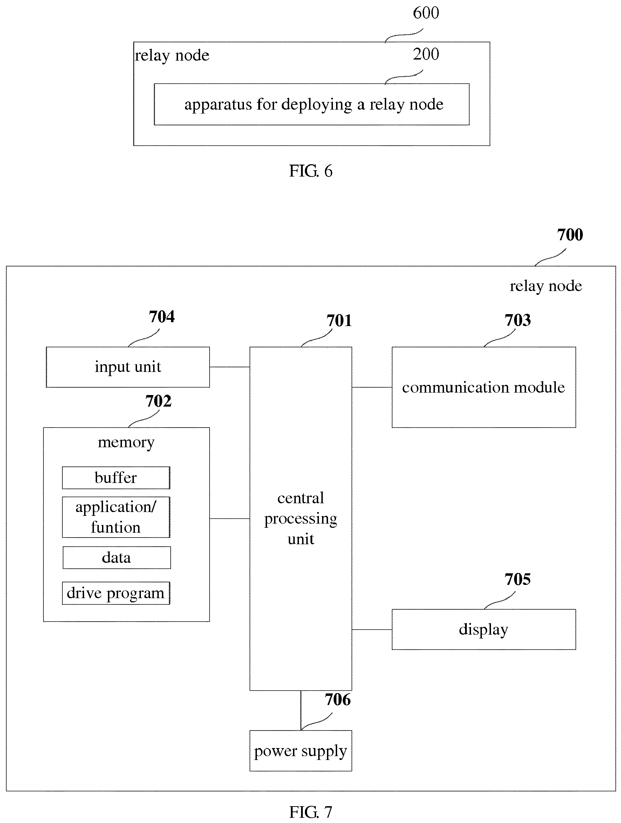

This embodiment provides a relay node. FIG. 6 is a schematic diagram of the relay node. As shown in FIG. 6, the relay node 600 includes the apparatus 200 for deploying a relay node as described in Embodiment 1. As the apparatus 200 for deploying a relay node has been described in detail in Embodiment 1, its contents are incorporated herein, and shall not be described herein any further.

FIG. 7 is a schematic diagram of a systematic structure of the relay node of this embodiment. As shown in FIG. 7, the relay node 700 may include a central processing unit (CPU) 701 and a memory 702, the memory 702 being coupled to the central processing unit 701. It should be noted that this figure is illustrative only, and other types of structures may also be used, so as to supplement or replace this structure and achieve telecommunications function or other functions.

In an implementation, the functions of the apparatus 200 for deploying a relay node described in Embodiment 1 may be integrated into the central processing unit 701. For example, the central processing unit 701 may be configured to: detect receiving power of all neighboring nodes during movement of the relay node, and take a predetermined number of neighboring nodes which have joined in a network, are capable of communicating with a sink node and have relatively high receiving power, in all the neighboring nodes as flag nodes of the relay node; compare a sum of receiving power of all detected flag nodes with a deployment prompt decision interval; and perform a corresponding prompt according to a comparison result.

In another implementation, the apparatus 200 for deploying a relay node and the central processing unit 701 may be configured separately. For example, the apparatus 200 for deploying a relay node may be configured as a chip connected to the central processing unit 701, with its functions being realized under control of the central processing unit 701.

As shown in FIG. 7, the relay node 700 may further include a communication module 703, an input unit 704, a display 705 and a power supply 706. It should be noted that the relay node 700 does not necessarily include all the parts shown in FIG. 7, and furthermore, the relay node 700 may include parts not shown in FIG. 7, and the prior art may be referred to.

As shown in FIG. 7, the central processing unit 701 is sometimes referred to as a controller or control, and may include a microprocessor or other processor devices and/or logic devices. The central processing unit 701 receives input and controls operations of every components of the relay node 700.

In this embodiment, the memory 702 may be, for example, one or more of a buffer memory, a flash memory, a hard drive, a mobile medium, a volatile memory, a nonvolatile memory, or other suitable devices, which may store predefined or preconfigured information, and may further store a program executing a related information. And the central processing unit 701 may execute the program stored in the memory 702, so as to realize information storage or processing, etc. Functions of other parts are similar to those of the prior art, which shall not be described herein any further. The parts of the relay node 700 may be realized by specific hardware, firmware, software, or any combination thereof, without departing from the scope of the present disclosure.

With the relay node of this embodiment, connectivity between all the sensor nodes and the sink node in the wireless sensor network may be achieved.

### Embodiment 4

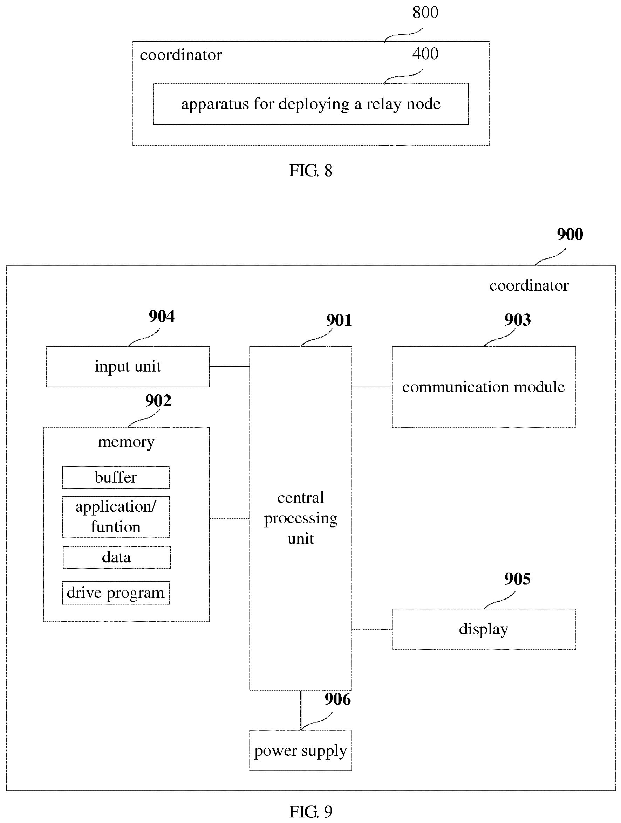

An embodiment further provides a coordinator. FIG. 8 is a schematic diagram of the coordinator. As shown in FIG. 8, the coordinator 800 includes the apparatus 400 for deploying a relay node as described in Embodiment 2. As the apparatus 400 for deploying a relay node has been described in detail in Embodiment 2, its contents are incorporated herein, and shall not be described herein any further.

FIG. 9 is a schematic diagram of a systematic structure of the coordinator of this embodiment. As shown in FIG. 9, the coordinator 900 may include a central processing unit (CPU) 901 and a memory 902, the memory 902 being coupled to the central processing unit 901. It should be noted that this figure is illustrative only, and other types of structures may also be used, so as to supplement or replace this structure and achieve telecommunications function or other functions.

In an implementation, the functions of the apparatus 400 for deploying a relay node described in Embodiment 2 may be integrated into the central processing unit 901. For example, the central processing unit 901 may be configured to: receive information from a node to be deployed; determine a deployment prompt decision interval according to the information from the node to be deployed; and transmit the determined deployment prompt decision interval to the node to be deployed, so that the node to be deployed performs a corresponding deployment prompt according to the deployment prompt decision interval.

In another implementation, the apparatus 400 for deploying a relay node and the central processing unit 901 may be configured separately. For example, the apparatus 400 for deploying a relay node may be configured as a chip connected to the central processing unit 901, with its functions being realized under control of the central processing unit 901.

As shown in FIG. 9, the coordinator 900 may further include a communication module 903, an input unit 904, a display 905 and a power supply 906. It should be noted that the coordinator 900 does not necessarily include all the parts shown in FIG. 9, and furthermore, the coordinator 900 may include parts not shown in FIG. 9, and the prior art may be referred to.

As shown in FIG. 9, the central processing unit 901 is sometimes referred to as a controller or control, and may include a microprocessor or other processor devices and/or logic devices. The central processing unit 901 receives input and controls operations of every components of the coordinator 900.

In this embodiment, the memory 902 may be, for example, one or more of a buffer memory, a flash memory, a hard drive, a mobile medium, a volatile memory, a nonvolatile memory, or other suitable devices, which may store predefined or preconfigured information, and may further store a program executing a related information. And the central processing unit 901 may execute the program stored in the memory 902, so as to realize information storage or processing, etc. Functions of other parts are similar to those of the prior art, which shall not be described herein any further. The parts of the coordinator 900 may be realized by specific hardware, firmware, software, or any combination thereof, without departing from the scope of the present disclosure.

In this embodiment, the coordinator may be a sink node in a wireless sensor network, and may also be any node that has joined in a network.

By transmitting the decision interval by the coordinator of this embodiment to the node to be deployed, the node to be deployed performs the deployment of the relay node accordingly, thereby achieving connectivity between all the sensor nodes and the sink node in the wireless sensor network.

### Embodiment 5

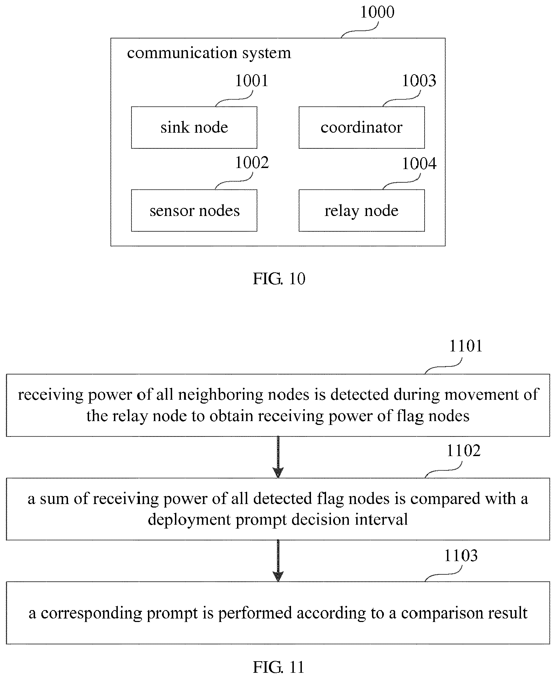

An embodiment of this disclosure further provides a communication system. FIG. 10 is a schematic diagram of the communication system. As shown in FIG. 10, the system 1000 includes a sink node 1001, sensor nodes 1002, a coordinator 1003 and a relay node 1004.

In this embodiment, the prior art may be referred to for structures and functions of the sink node 1001 and the sensor nodes 1002, and the sensor nodes 1002 may be randomly deployed according to an actual deployment environment, or may be deployed as demanded.

In this embodiment, the relay node 1004 is taken as a node to be deployed and is deployed according to the deployment method of the above embodiment. The relay node 1004 may be achieved by the relay node 600 and the relay node 700 of Embodiment 3, the contents of which being incorporated herein, and being not going to be described herein any further. Furthermore, the number of the relay node 1004 may be determined according to an actual deployment situation, and is not limited to 1.

In this embodiment, the coordinator 1003 may be achieved by the coordinator 800 and the coordinator 900 of Embodiment 4, the contents of which being incorporated herein, and being not going to be described herein any further. Furthermore, the coordinator 1003 may be configured in said sink node 1001, and may also be configured in another entity, so as to carry out functions of the above coordinator.

With the communication system of this embodiment, connectivity between all the sensor nodes and the sink node in the wireless sensor network may be achieved.

### Embodiment 6

An embodiment further provides a method for deploying a relay node, applicable to a relay node. As principles of the method for solving problems are similar to that of the apparatus in Embodiment 1, the implementation of the apparatus in Embodiment 1 may be referred to for specific implementation of the method, with identical contents being not going to be described herein any further.

FIG. 11 is a schematic diagram of an implementation of the method for deploying a relay node. In deploying the relay node, the relay node is taken as a node to be deployed. Referring to FIG. 11, the method includes:
step 1101: receiving power of all neighboring nodes is detected during movement of the relay node, and a predetermined number of neighboring nodes which have joined in a network, are capable of communicating with a sink node and have neighboring nodes, in all the neighboring nodes are taken as flag nodes of the relay node;
step 1102: a sum of receiving power of all detected flag nodes is compared with a deployment prompt decision interval; and
step 1103: a corresponding prompt is performed according to a comparison result.

In this embodiment, the relay node may interchange the above deployment prompt decision interval with the coordinator, and the deployment prompt decision interval may include multiple threshold value intervals, such that a corresponding prompt is performed according to a threshold value interval where the sum of receiving power is in in step 1103.

In this embodiment, if the sum of receiving power is in a movement interval of the multiple threshold value intervals, a prompt of keeping moving is performed in step 1103; if the sum of receiving power is in a deployment interval of the multiple threshold value intervals, a deployable prompt is performed in step 1103; and if the sum of receiving power is in an alarm interval of the multiple threshold value intervals, an alarm prompt and/or a back prompt is performed in step 1103.

In this embodiment, if an alarm prompt and/or a back prompt is performed in step 1103, the receiving power of all the flag nodes is continued to be detected; the sum of the receiving power of all the flag nodes obtained by the above continued detection is compared with a current deployment prompt decision interval; the receiving power of all the flag nodes is continued to be detected when the sum of the receiving power of all the flag nodes is in the alarm interval; and a deployable prompt is performed when the sum of the receiving power of all the flag nodes is not in the alarm interval.

In this embodiment, the relay node may further transmit the sum of the receiving power of all the flag nodes in deploying the relay node to the coordinator, so that the coordinator adjusts the deployment prompt decision interval according to the sum of the receiving power.

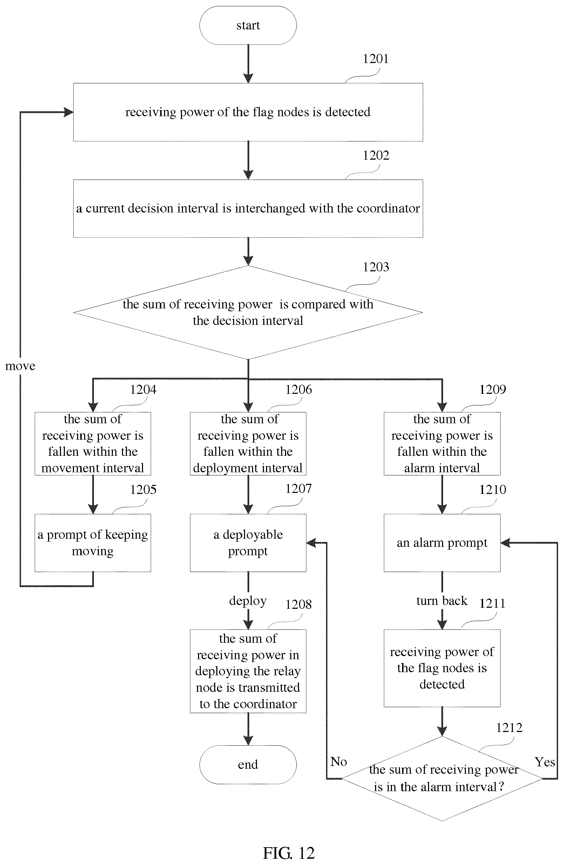

FIG. 12 is a flowchart of another implementation of the method for deploying a relay node. In deploying the relay node, it is taken as a node to be deployed. Referring to FIG. 12, the method includes:
step 1201: the receiving power of the flag nodes is detected;
   the flag nodes are determined by detecting receiving power of neighboring nodes, so as to obtain the receiving power of the flag nodes;
step 1202: a current decision interval is interchanged with the coordinator;
   the current decision interval may possibly be a decision interval predetermined by the coordinator, and may also be a decision interval adjusted by the coordinator according to the received sum of receiving power of all the flag nodes in deploying the relay node; processing of the coordinator shall be described in the following embodiment;
step 1203: the sum of receiving power of the flag nodes is compared with the decision interval;
step 1204: the sum of receiving power is fallen within the movement interval;
step 1205: a prompt of keeping moving is performed;
   after the node to be deployed continues to move, turn back to step 1201 to proceed with the detection process;
step 1206: the sum of receiving power is fallen within the deployment interval;
step 1207: a deployable prompt is performed;
step 1208: the sum of receiving power in deploying the relay node is transmitted to the coordinator;
   after the node to be deployed is deployed as a relay node, it may transmit the sum of receiving power of all the flag nodes in deploying the relay node to the coordinator;
step 1209: the sum of receiving power is fallen within the alarm interval;
step 1210: an alarm prompt is performed;
and a back prompt may also be performed;
step 1211: receiving power of the flag nodes is detected;
   after the node to be deployed turns back, the receiving power of the flag nodes is detected, a detection method being identical to step 1201;
step 1212: whether the sum of receiving power is in the alarm interval is judged?
   if it is in the alarm interval, the flow turns back to step 1210 to proceed with processing; and if it is not in the alarm interval, the flow turns back to step 1207 to proceed with processing.

By deploying the relay node by using the method provided by this embodiment, connectivity between all the sensor nodes and the sink node in the wireless sensor network may be achieved.

### Embodiment 7

An embodiment further provides a method for deploying a relay node, applicable to a coordinator. As principles of the method for solving problems are similar to that of the apparatus in Embodiment 2, the implementation of the apparatus in Embodiment 2 may be referred to for implementation of the method, with identical contents being not going to be described herein any further.

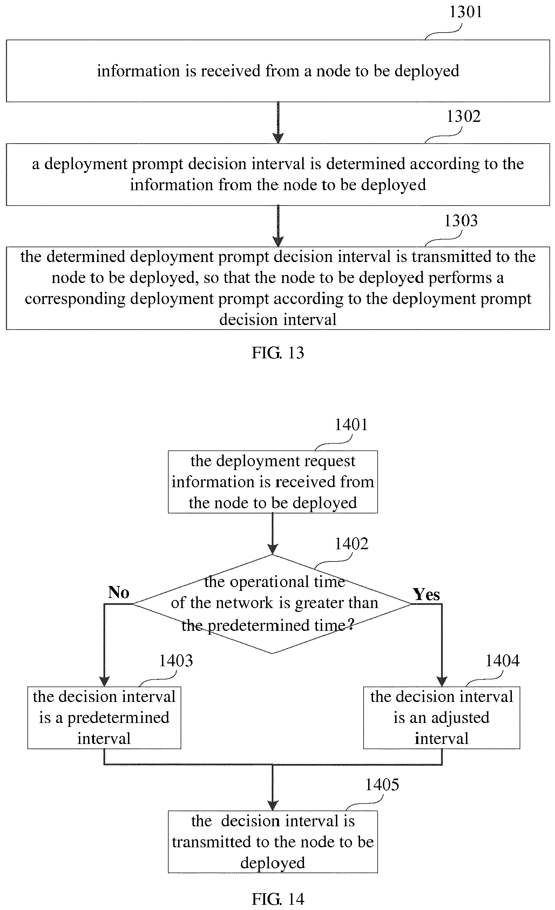

FIG. 13 is a schematic diagram of an implementation of the method for deploying a relay node. In deploying the relay node, the relay node is taken as a node to be deployed. Referring to FIG. 13, the method includes:
step 1301: information is received from a node to be deployed;
step 1302: a deployment prompt decision interval is determined according to the information from the node to be deployed; and
step 1303: the determined deployment prompt decision interval is transmitted to the node to be deployed, so that the node to be deployed performs a corresponding deployment prompt according to the deployment prompt decision interval.

In this embodiment, if the received information is deployment request information of the node to be deployed, whether an operational time of a network is greater than a predetermined time is judged in step 1302; and if it is judged no, the deployment prompt decision interval is determined as a predetermined decision interval, and if it is judged yes, the deployment prompt decision interval is determined as an adjusted deployment prompt decision interval.

In this embodiment, if the received information is a sum of receiving power of all flag nodes in deploying the relay node, whether an operational time of a network is greater than a predetermined time is judged in step 1302; and if it is judged no, the received sum of receiving power is saved, and if it is judged yes, the deployment prompt decision interval is adjusted according to the received sum of receiving power.

In this embodiment, the deployment prompt decision interval includes multiple threshold value intervals, in adjusting the deployment prompt decision interval, a size of a deployment interval may be adjusted by taking a mean value of the sum of receiving power as a median of the deployment interval of the multiple threshold value intervals, and sizes of other threshold value intervals are adjusted by keeping an alarm interval of the multiple threshold value intervals constant.

FIG. 14 is a flow of processing of the coordinator in receiving deployment request information from the node to be deployed. Referring to FIG. 14, the flow includes:
step 1401: the deployment request information is received from the node to be deployed;
step 1402: whether the operational time of the network is greater than the predetermined time is judged? step 1404 is executed if it is judged yes, otherwise, step 1403 is executed;
step 1403: it is determined that the decision interval is a predetermined interval;
step 1404: it is determined that the decision interval is an adjusted interval; and
step 1405: the determined decision interval is transmitted to the node to be deployed.

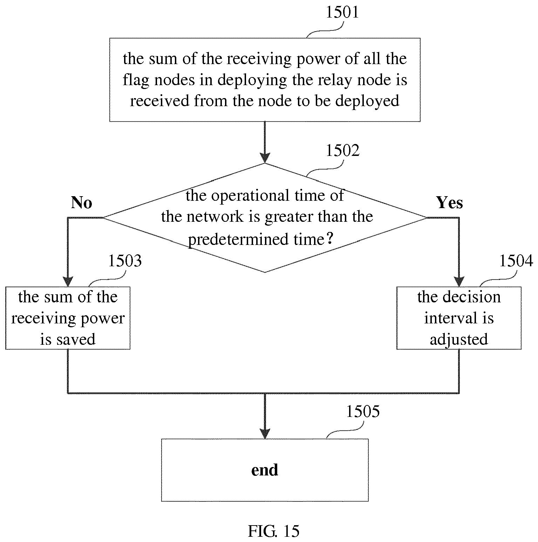

FIG. 15 is a flow of processing of the coordinator in receiving the sum of the receiving power of all the flag nodes in deploying the relay node from the node to be deployed. Referring to FIG. 15, the flow includes:
step 1501: the sum of the receiving power of all the flag nodes in deploying the relay node is received from the node to be deployed;
step 1502: whether the operational time of the network is greater than the predetermined time is judged? step 1504 is executed if it is judged yes, otherwise, step 1503 is executed;
step 1503: the sum of the receiving power is saved;
step 1504: the decision interval is adjusted;
step 1505: end.

By deploying the relay node by using the method provided by this embodiment, connectivity between all the sensor nodes and the sink node in the wireless sensor network may be achieved.

An embodiment of the present disclosure provides a computer readable program code, which, when executed in a node to be deployed, will cause a computer unit to carry out the method as described in Embodiment 6 in the node to be deployed.

An embodiment of the present disclosure provides a computer readable medium, including a computer readable program code, which will cause a computer unit to carry out the method as described in Embodiment 6 in a node to be deployed.

An embodiment of the present disclosure provides a computer readable program code, which, when executed in a coordinator, will cause a computer unit to carry out the method as described in Embodiment 7 in the coordinator.

An embodiment of the present disclosure provides a computer readable medium, including a computer readable program code, which will cause a computer unit to carry out the method as described in Embodiment 7 in a coordinator.

The above apparatuses and methods of the present disclosure may be implemented by hardware, or by hardware in combination with software. The present disclosure relates to such a computer-readable program that when the program is executed by a logic device, the logic device is enabled to carry out the apparatus or components as described above, or to carry out the methods or steps as described above. The present disclosure also relates to a storage medium for storing the above program, such as a hard disk, a floppy disk, a CD, a DVD, and a flash memory, etc.

The present disclosure is described above with reference to particular embodiments. However, it should be understood by those skilled in the art that such a description is illustrative only, and not intended to limit the protection scope of the present disclosure. Various variants and modifications may be made by those skilled in the art according to the spirits and principles of the present disclosure, and such variants and modifications fall within the scope of the present disclosure.

For implementations of the present disclosure containing the above embodiments, following supplements are further disclosed.
Supplement 1. An apparatus for deploying a relay node, configured in a relay node taken as a node to be deployed, the apparatus including:
   a detecting module configured to detect receiving power of all neighboring nodes during movement of the relay node, and take a predetermined number of neighboring nodes which have joined in a network, are capable of communicating with a sink node and have relatively high receiving power, in all the neighboring nodes as flag nodes of the relay node;
   a comparing module configured to compare a sum of receiving power of all flag nodes detected by the detecting module with a deployment prompt decision interval; and
   a prompting module configured to perform a corresponding prompt according to a comparison result of the comparing module.
Supplement 2. The apparatus according to supplement 1, wherein the apparatus further includes:
   a first communicating module configured to interchange the deployment prompt decision interval with a coordinator;
   and the comparing module compares the sum of receiving power of all the flag nodes detected by the detecting module with the deployment prompt decision interval obtained by the first communicating module.
Supplement 3. The apparatus according to supplement 1, wherein the deployment prompt decision interval includes multiple threshold value intervals, and the prompting module performs a corresponding prompt according to a threshold value interval where the sum of receiving power is in.
Supplement 4. The apparatus according to supplement 3, wherein,
   if the sum of receiving power is in a movement interval of the multiple threshold value intervals, the prompting module performs a prompt of keeping moving;
   if the sum of receiving power is in a deployment interval of the multiple threshold value intervals, the prompting module performs a deployable prompt;
   and if the sum of receiving power is in an alarm interval of the multiple threshold value intervals, the prompting module performs an alarm prompt and/or a back prompt.
Supplement 5. The apparatus according to supplement 4, wherein,
   if the prompting module performs an alarm prompt and/or a back prompt, the detecting module continues to detect receiving power of all the flag nodes;
   the comparing module compares a sum of the receiving power of all the flag nodes obtained by the continued detection with a current deployment prompt decision interval;
   the detecting module continues to detect receiving power of all the flag nodes when the sum of the receiving power of all the flag nodes is in the alarm interval;
   and the prompting module performs a deployable prompt when the sum of the receiving power of all the flag nodes is not in the alarm interval.
Supplement 6. The apparatus according to supplement 1, wherein the apparatus further includes:
   a second communicating module configured to transmit the sum of the receiving power of all the flag nodes in deploying the relay node to the coordinator, so that the coordinator adjusts the deployment prompt decision interval according to the sum of the receiving power.
Supplement 7. An apparatus for deploying a relay node, configured in a coordinator, the apparatus including:
   a communicating module configured to receive information from a node to be deployed; and
   a determining module configured to determine a deployment prompt decision interval according to the information from the node to be deployed;
   and the communicating module transmits the deployment prompt decision interval determined by the determining module to the node to be deployed, so that the node to be deployed performs a corresponding deployment prompt according to the deployment prompt decision interval.
Supplement 8. The apparatus according to supplement 7, wherein the determining module includes:
   a first judging module configured to judge whether an operational time of a network is greater than a predetermined time when the information received by the communicating module is deployment request information of the node to be deployed; and
   a first determining module configured to determine that the deployment prompt decision interval is a predetermined decision interval when it is judged no by the first judging module, and determine that the deployment prompt decision interval is an adjusted deployment prompt decision interval when it is judged yes by the first judging module.
Supplement 9. The apparatus according to supplement 7, wherein the determining module includes:
   a second judging module configured to judge whether an operational time of a network is greater than a predetermined time when the information received by the communicating module is a sum of receiving power of all flag nodes in deploying the relay node; and
   an adjusting module configured to save the received sum of receiving power when it is judged no by the second judging module, and adjust the deployment prompt decision interval according to the received sum of receiving power when it is judged yes by the second judging module.
Supplement 10. The apparatus according to supplement 9, wherein the deployment prompt decision interval includes multiple threshold value intervals, and the adjusting module adjusts a size of a deployment interval by taking a mean value of the sum of receiving power as a median of the deployment interval of the multiple threshold value intervals, and adjusts sizes of other threshold value intervals by keeping an alarm interval of the multiple threshold value intervals constant.
Supplement 11. A method for deploying a relay node, applicable to a relay node taken as a node to be deployed, the method including:
   detecting receiving power of all neighboring nodes during movement of the relay node, and taking a predetermined number of neighboring nodes which have joined in a network, are capable of communicating with a sink node and have relatively high receiving power, in all the neighboring nodes as flag nodes of the relay node;
   comparing a sum of receiving power of all the flag nodes with a deployment prompt decision interval; and
   performing a corresponding prompt according to a comparison result.
Supplement 12. The method according to supplement 11, wherein the method further includes:
   interchanging the deployment prompt decision interval with a coordinator.
Supplement 13. The method according to supplement 11, wherein the deployment prompt decision interval includes multiple threshold value intervals, and the performing a corresponding prompt according to a comparison result includes:
   performing a corresponding prompt according to a threshold value interval where the sum of receiving power is in.
Supplement 14. The method according to supplement 13, wherein,
   if the sum of receiving power is in a movement interval of the multiple threshold value intervals, a prompt of keeping moving is performed;
   if the sum of receiving power is in a deployment interval of the multiple threshold value intervals, a deployable prompt is performed;
   and if the sum of receiving power is in an alarm interval of the multiple threshold value intervals, an alarm prompt and/or a back prompt is performed.
Supplement 15. The method according to supplement 14, wherein if an alarm prompt and/or a back prompt is performed, the method further includes:
   continuing to detect receiving power of all the flag nodes;
   comparing a sum of the receiving power of all the flag nodes obtained by the continued detection with a current deployment prompt decision interval;
   continuing to detect receiving power of all the flag nodes when the sum of the receiving power of all the flag nodes is in the alarm interval;
   performing a deployable prompt when the sum of the receiving power of all the flag nodes is not in the alarm interval.
Supplement 16. The method according to supplement 11, wherein the method further includes:
   transmitting the sum of the receiving power of all the flag nodes in deploying the relay node to the coordinator, so that the coordinator adjusts the deployment prompt decision interval according to the sum of the receiving power.
Supplement 17. The method according to supplement 16, wherein in the adjusted deployment prompt decision interval, a median of the deployment interval is a mean value of the sum of the receiving power, the alarm interval is constant, and other threshold intervals are a difference between a total decision interval with the alarm interval and the deployment interval.

## Claims

1. An apparatus for deploying a relay node, configured in a relay node taken as a node to be deployed, the apparatus comprising:
a detecting module configured to detect receiving power of all neighboring nodes during movement of the relay node, and take a predetermined number of neighboring nodes which have joined in a network, are capable of communicating with a sink node and have relatively high receiving power, in all the neighboring nodes as flag nodes of the relay node;
a comparing module configured to compare a sum of receiving power of all flag nodes detected by the detecting module with a deployment prompt decision interval; and
a prompting module configured to perform a corresponding prompt according to a comparison result of the comparing module.

2. The apparatus according to claim 1, wherein the apparatus further comprises:
a first communicating module configured to interchange the deployment prompt decision interval with a coordinator;
and the comparing module compares the sum of receiving power of all the flag nodes detected by the detecting module with the deployment prompt decision interval obtained by the first communicating module.

3. The apparatus according to claim 1, wherein the deployment prompt decision interval comprises multiple threshold value intervals, and the prompting module performs a corresponding prompt according to a threshold value interval where the sum of receiving power is in.

4. The apparatus according to claim 3, wherein,
if the sum of receiving power is in a movement interval of the multiple threshold value intervals, the prompting module performs a prompt of keeping moving;
if the sum of receiving power is in a deployment interval of the multiple threshold value intervals, the prompting module performs a deployable prompt;
and if the sum of receiving power is in an alarm interval of the multiple threshold value intervals, the prompting module performs an alarm prompt and/or a back prompt.

5. The apparatus according to claim 4, wherein,
if the prompting module performs an alarm prompt and/or a back prompt, the detecting module continues to detect receiving power of all the flag nodes;
the comparing module compares a sum of the receiving power of all the flag nodes obtained by the continued detection with a current deployment prompt decision interval;
the detecting module continues to detect receiving power of all the flag nodes when the sum of the receiving power of all the flag nodes is in the alarm interval;
and the prompting module performs a deployable prompt when the sum of the receiving power of all the flag nodes is not in the alarm interval.

6. The apparatus according to claim 1, wherein the apparatus further comprises: a second communicating module configured to transmit the sum of the receiving power of all the flag nodes in deploying the relay node to the coordinator, so that the coordinator adjusts the deployment prompt decision interval according to the sum of the receiving power.

7. An apparatus for deploying a relay node, configured in a coordinator, the apparatus comprising:
a communicating module configured to receive information from a node to be deployed; and
a determining module configured to determine a deployment prompt decision interval according to the information from the node to be deployed;
and the communicating module transmits the deployment prompt decision interval determined by the determining module to the node to be deployed, so that the node to be deployed performs a corresponding deployment prompt according to the deployment prompt decision interval.

8. The apparatus according to claim 7, wherein the determining module comprises:
a first judging module configured to judge whether an operational time of a network is greater than a predetermined time when the information received by the communicating module is deployment request information of the node to be deployed; and
a first determining module configured to determine that the deployment prompt decision interval is a predetermined decision interval when it is judged no by the first judging module, and determine that the deployment prompt decision interval is an adjusted deployment prompt decision interval when it is judged yes by the first judging module.

9. The apparatus according to claim 7, wherein the determining module comprises:
a second judging module configured to judge whether an operational time of a network is greater than a predetermined time when the information received by the communicating module is a sum of receiving power of all flag nodes in deploying the relay node; and
an adjusting module configured to save the received sum of receiving power when it is judged no by the second judging module, and adjust the deployment prompt decision interval according to the received sum of receiving power when it is judged yes by the second judging module.

10. The apparatus according to claim 9, wherein the deployment prompt decision interval comprises multiple threshold value intervals, and the adjusting module adjusts a size of a deployment interval by taking a mean value of the sum of receiving power as a median of the deployment interval of the multiple threshold value intervals, and adjusts sizes of other threshold value intervals by keeping an alarm interval of the multiple threshold value intervals constant.

11. A method for deploying a relay node, applicable to a relay node taken as a node to be deployed, the method including:
detecting receiving power of all neighboring nodes during movement of the relay node, and taking a predetermined number of neighboring nodes which have joined in a network, are capable of communicating with a sink node and have relatively high receiving power, in all the neighboring nodes as flag nodes of the relay node;
comparing a sum of receiving power of all the flag nodes with a deployment prompt decision interval; and
performing a corresponding prompt according to a comparison result.

12. The method according to claim 11, wherein the method further includes:
interchanging the deployment prompt decision interval with a coordinator.

13. The method according to claim 11, wherein the deployment prompt decision interval includes multiple threshold value intervals, and the performing a corresponding prompt according to a comparison result includes:
performing a corresponding prompt according to a threshold value interval where the sum of receiving power is in.

14. The method according to claim 13, wherein,
if the sum of receiving power is in a movement interval of the multiple threshold value intervals, a prompt of keeping moving is performed;
if the sum of receiving power is in a deployment interval of the multiple threshold value intervals, a deployable prompt is performed;
and if the sum of receiving power is in an alarm interval of the multiple threshold value intervals, an alarm prompt and/or a back prompt is performed.

15. The method according to claim 14, wherein if an alarm prompt and/or a back prompt is performed, the method further includes:
continuing to detect receiving power of all the flag nodes;
comparing a sum of the receiving power of all the flag nodes obtained by the continued detection with a current deployment prompt decision interval;
continuing to detect receiving power of all the flag nodes when the sum of the receiving power of all the flag nodes is in the alarm interval;
performing a deployable prompt when the sum of the receiving power of all the flag nodes is not in the alarm interval.

16. The method according to claim 11, wherein the method further includes:
transmitting the sum of the receiving power of all the flag nodes in deploying the relay node to the coordinator, so that the coordinator adjusts the deployment prompt decision interval according to the sum of the receiving power.

17. The method according to claim 16, wherein in the adjusted deployment prompt decision interval, a median of the deployment interval is a mean value of the sum of the receiving power, the alarm interval is constant, and other threshold intervals are a difference between a total decision interval with the alarm interval and the deployment interval.
